# EUROPÄISCHE PATENTSCHRIFT

(11) **EP 1 469 062 B1**
(45) Veröffentlichungstag und Bekanntmachung des Hinweises auf die Patenterteilung: **06.07.2005**
(21) Anmeldenummer: 03008100.4
(22) Anmeldetag: 15.04.2003
(51) Int. Cl.: C12C 13/02

(54) **Vorrichtung und Verfahren zur Bierbereitung**
Apparatus and method for preparing beer
Procédé et appareil pour la préparation de la bière

(43) Veröffentlichungstag der Anmeldung: 20.10.2004
(73) Patentinhaber: Anton Steinecker Maschinenfabrik GmbH, 85356 Freising-Attaching (DE)
(72) Erfinder: Wasmuht, Klaus-Karl, 91792 Ellingen (DE); Stippler, Kurt, Dr., 85417 Marzling (DE)
(74) Vertreter: Grünecker, Kinkeldey, Stockmair & Schwanhäusser Anwaltssozietät

(56) Entgegenhaltungen:
- EP-A- 0 605 783
- WO-A-99/13050
- DE-A- 19 634 010
- DE-C- 4 304 383

## Beschreibung

Die Erfindung bezieht sich auf eine Vorrichtung und Verfahren zur Bierbereitung, insbesondere eine Würzepfanne der im Oberbegriff von Anspruch 1 erläuterten Art.

Eine derartige Würzepfanne ist beispielsweise aus der DE-C-43 04 383 bekannt. Die bekannte Würzepfanne enthält einen Gefäßkörper, in dem ein sogenannter Innenkocher zum Aufheizen der Würze angeordnet ist. Der Innenkocher ist als dampfbeheizter Wärmetauscher mit senkrecht verlaufenden Durchtrittskanälen für die Würze ausgebildet, so dass die Würze vom Boden des Gefäßes durch die Aufheizung im Wärmetauscher nach oben steigt Oberhalb des Wärmetauschers enthält der Innenkocher einen Staukonus mit einer zylindrischen Auslassleitung, durch den die Thermoströmung der Würze gebündelt und nach oben über den Flüssigkeitsspiegel der Würze im Gefäßkörper geleitet wird. Oberhalb der Mündungsöffnung der zylindrischen Auslassleitung ist ein Leitschirm in Form einer konischen Prallfläche vorgesehen, der die aus der zylindrischen Auslassleitung heraustretende Würze auffängt und wieder nach unten in Richtung des Flüssigkeitsspiegels umlenkt. Die bekannte Würzepfanne enthält weiterhin eine Rohrleitung mit einer Pumpe für eine Zwangsumwälzung der Würze im Gefäßkörper, wobei die Würze aus dem Gefäßkörper außerhalb des Innenkochers abgezogen wird und in den Gefäßkörper direkt unterhalb des Innenkochers wieder eingepumpt wird. Der Bereich unterhalb des Innenkochers und um die Einmündung der Rohrleitung ist gegenüber dem restlichen Gefäßkörper abgeschlossen, so dass sichergestellt ist, dass die über die Rohrleitung zwangsumgewälzte Würze nur in den Innenkocher gelangt und nicht seitlich in den Gefäßkörper ausweicht. Es hat sich jedoch herausgestellt, dass die bekannte Würzepfanne in ihrer Effektivität noch weiter verbessert werden kann.

Der Erfindung liegt somit die Aufgabe zugrunde, eine derartige Vornchtung und Verfahren mit einer verbesserten Leistungsfähigkeit bereitzustellen.

Durch die erfindungsgemäß vorgesehene und angeordnete Dünnschicht-Verteileinrichtung mit ihrem verringerten Auslassquerschnitt und der darüber angeordneten Prallfläche wird die durch die Pumpe zusätzlich zur Wärmeströmung in die Würze eingeleitete Energie in vorteilhafter Weise dazu benutzt, die Würze zusätzlich zum üblichen Würzekreislauf und der Verteilung durch den Innenkocher einem zweiten Kreislauf mit Feinverteilung zuzuführen, durch die beispielsweise das Ausdampfen unerwünschter Aromastoffe weiter verbessert wird.

Zwar ist eine Dünnschicht-Verteileinrichtung beispielsweise bereits aus der WO 00/00583 bekannt, dort ersetzt sie jedoch den Kocher.

Weiterhin ist es beispielsweise aus der EP-A-605 783 bekannt, einen Innenkocher für eine Würzepfanne mit zwei senkrecht übereinander liegenden Würzeleitschirmen zu versehen, wobei der untere Würzeleitschirm mit einer mittigen Öffnung versehen ist, durch die vom Wärmetauscher bewirkte Thermoströmung nach oben hindurchtreten kann, so dass sich zwei Verteilglocken für die Würze ausbilden, die jedoch aufgrund der relativ geringen Strömungsgeschwindigkeit weniger effektiv sind.

Dagegen wird durch den erfindungsgemäß verringerten Mündungsquerschnitt der durch eine Pumpe versorgten Rohrleitung dafür gesorgt, dass eine kleinere Volumenmenge der Würze gleichzeitig aus der Mündungsöffnung austritt, deren Geschwindigkeit jedoch gegenüber einer reinen Wärmeströmung stark erhöht wird. Auf diese Weise wird durch die Prallflache eine Würzeglocke mit einer wesentlich geringeren Schichtdicke ausgebildet, wodurch insbesondere das Ausdampfen unerwünschter Aromastoffe stark verbessert wird.

Vorteilhafte Weiterbildungen der Erfindung sind den Unteransprüchen zu entnehmen.

Die Ansprüche 2 und 3 beschreiben konstruktiv vorteilhafte Ausfuhrungsformen.

Von besonderem Vorteil ist die zusätzliche Einleiteinrichtung gemäß Anspruch 4, da dadurch der Durchsatz durch die Dünnschicht-Verteileinrichtung erhöht und gleichzeitig die Strömung durch den Innenkocher beschleunigt wird, was den Durchsatz erhöht und Fouling vermindert. Dies trifft insbesondere für eine selbsttätige Ansaugung gemäß den Ansprüchen 5 bzw. 6 zu, da auf diese Weise die volle Durchsatzkapazität erreicht wird.

Der Form der Prallflache kommt eine besondere Bedeutung zur Ausbildung einer möglichst dünnen Schicht zu. Bevorzugt ist die Prallfläche bereits in der Mündungsöffnung vorgesehen und erstreckt sich von dort sanft gekrümmt schräg nach oben außen.

Auch die Form der Mündungsöffnung als Ringspalt, der gegebenenfalls in seiner Größe einstellbar ist, fördert die Ausbildung einer dünnen Schicht.

Anspruch 11 betrifft ein besonders bevorzugtes Verfahren zur Bierbereitung.

Ausführungsbeispiele der Erfindung werden nachfolgend anhand der Zeichnungen näher erläutert. Es zeigen:
- Fig 1: eine erfindungsgemäß ausgebildete Würzepfanne in stark schematisierter Darstellung, und
- Fig 2: das Detail "A" aus Fig. 1 in geschnittener Darstellung, und
- Fig. 3: ein weiteres Ausführungsbeispiel der Erfindung.

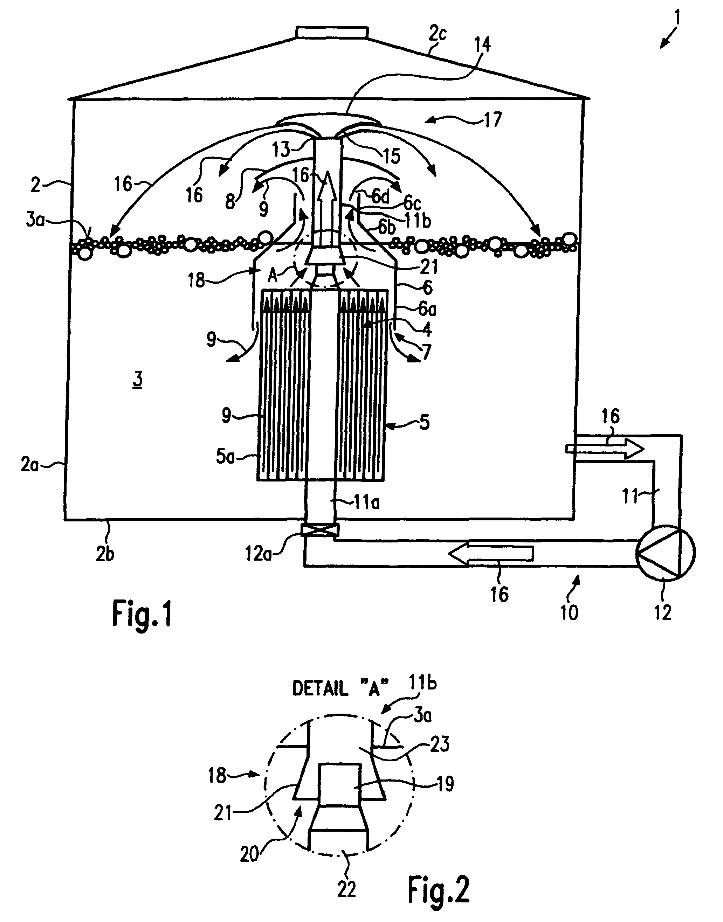

Fig 1 zeigt eine Vorrichtung zur Bierbereitung in Form einer Würzepfanne 1, insbesondere eine Whirlpoolpfanne, wie sie zum Herstellen und Aufbereiten von Würze bei der Bierherstellung verwendet wird. Die Würzepfanne 1 enthält einen üblichen Gefäßkörper 2 mit Seitenwänden 2a, einem Boden 2b und einem Deckel 2c, der die übliche Form aufweisen kann. Im dargestellten Ausführungsbeispiel hat der Gefäßkörper 2 einen kreisförmigen Querschnitt und ist mit senkrechter Achse aufgestellt Der Gefäßkörper 2 nimmt eine ausreichende Menge eines Vorrats 3 an Würze auf.

In der axialen Mitte des Gefäßkörpers 2 ist ein Innenkocher 4 angeordnet, der, wie dies bei diesen Innenkochem ublich ist, einen Wärmetauscher 5 und einen Staukonus 6 aufweist. Der Wärmetauscher 5 weist eine Vielzahl von Rohren 5a auf, die mit senkrechten Achsen und offenen Stirnseiten eingebaut und bevorzugt durch Dampf oder Heißwasser beheizt sind, wobei die Einrichtungen zur Dampfzuführung und sonstige für den Betrieb des Innenkochers 4 sowie der Würzepfanne 1 notwendigen Einrichtungen bekannt und aus Gründen der Übersichtlichkeit hier nicht dargestellt sind. Die Rohre 5a sind mit ihren offenen, unteren Stirnseiten in einem ausreichenden Abstand über dem Boden 2b angeordnet und enden mit ihren offenen, oberen Stirnseiten unterhalb des Flüssigkeitsspiegels 3a der Würze 3 im Gefaßkörper 2.

In der vorliegenden Beschreibung sind die Begriffe "oben" und "unten" im Hinblick auf die Richtung der Schwerkraft in Einbaustellung der jeweiligen Einrichtung im Betrieb definiert.

Der Staukonus 6 weist im vorliegenden Ausführungsbeispiel einen zylindrischen Bereich 6a auf, dessen unterer Rand einen größeren Durchmesser als der Wärmetauscher 5 aufweist, so dass sich zwischen dem Wärmetauscher 5 und dem zylindrischen Bereich 6a des Staukonus 6 eine Öffnung 7 befindet, durch die Würze hindurchtreten kann. Der zylindrische Bereich 6a setzt sich nach oben hin durch einen konischen Bereich 6b fort, der bis über den Flüssigkeitsspiegel 3a reicht und anschließend in einen zweiten zylindrischen Bereich 6c mündet, der sich vom konischen Bereich 6b ausreichend weit nach oben erstreckt, um die Thermoströmung der Würze aus dem Wärmetauscher 5 zu bündeln und zu vergleichmäßigen. Der zylindrische Bereich 6c hat zwischen dem konischen Bereich 6b und seiner Mündungsöffnung 6d den gleichen Querschnitt. Oberhalb der Mündungsöffnung 6d des Staukonus 6 und im Abstand dazu ist einer der üblichen Strömungsleitschirme 8 vorgesehen, der ähnlich einer Kugelkalotte gekrümmt ist, d.h. in der Nähe der axialen Mitte, oberhalb der Mündungsöffnung 6d seinen höchsten Punkt aufweist und mit zunehmendem radialen Abstand nach allen Seiten abfällt.

Der Innenkocher 4, wie er bisher beschrieben wurde, funktioniert wie übliche Innenkocher auch; d.h. durch die Erwärmung im Wärmetauscher 5 wird ein Wärmekreislauf in Gang gesetzt, d.h. die Würze steigt innerhalb der Rohre 5a nach oben in den Staukonus 6, wird dort zu einer Laminarströmung gebündelt und ausgerichtet und durch die Mündungsöffnung 6d nach oben gegen den Leitschirm 8 gedrückt, der die erwärmte Würze in einer Austrittsglocke wieder zurück in den Würzevorrat 3 einleitet, wie dies durch die Pfeile 9 bezeichnet ist. Weiterhin kann ein geringer Anteil der Strömung den Staukonus 6, ebenfalls durch einen Pfeil 9 angedeutet, durch die Öffnung 7 verlassen, wodurch für zusätzliche Turbulenz im Würzevorrat 3 gesorgt wird. Die Strömung entlang der Pfeile 9 bildet die Hauptströmung im Inneren der Würzepfanne 1.

An der Würzepfanne 1 ist weiterhin ein Würze-Zwangsumlauf 10 vorgesehen, der wenigstens eine Rohrleitung 11 und eine bevorzugt frequenzgeregelte Pumpe 12 umfasst. Die Rohrleitung 11 tritt im unteren Drittel im Bereich des Würzevorrates 3 aus der Seitenwand 2a des Gefäßkörpers 2 aus, läuft über die Pumpe 12 und gegebenenfalls über eine Regelklappe 12a (wenn die Pumpe 12 nicht frequenzgeregelt ist) und wird in der axialen Mitte bezüglich des Innenkochers 4 durch den Boden 2b des Gefäßkörpers 2 zurückgeführt. Die Rohrleitung 11 setzt sich im Inneren des Gefäßkörpers 2 als Steigleitung senkrecht nach oben fort. Enthält der Zwangsumlauf 10 mehrere Rohrleitungen 11, so werden diese über eine gemeinsame Pumpe und gegebenenfalls eine gemeinsame Regelklappe in eine gemeinsame Steigleitung geführt. Die Steigleitung enthält einen ersten Rohrleitungsabschnitt 11 a, der sich von der Einmündung der Rohrleitung 11 in den Gefäßkörper 2 senkrecht nach oben durch den Wärmetauscher 5 erstreckt, und einen sich daran anschließenden, zweiten Rohrleitungsabschnitt 11b, der über den Wärmetauscher 5 hinausragt und den restlichen Innenkocher 4, d.h. den Staukonus 6 und den Leitschirm 8 durchsetzt und über den Leitschirm 8 vorragt. Dort ist der zweite Rohrleitungsabschnitt 11b stirnseitig zur Ausbildung einer in einer im Wesentlichen waagerechten Ebene liegenden Mündungsöffnung 13 offen.

Oberhalb der Mündungsoffnung 13 ist ein Leitkörper 14 mit einer nach unten weisenden Prallfläche 15 angeordnet Die Prallfläche 15 taucht in die Mündungsöffnung 13 ein bzw. beginnt dort in der Nähe der axialen Mitte der Mündungsöffnung 13 und steigt von dort, sich sanft krümmend nach schräg oben außen an, wobei die Krümmung der Prallfläche 15 so ausgebildet ist, dass in der Nahe der Mündungsöffnung 13 die axialen Anteile der Krümmung überwiegen, die im weiteren Verlauf der Krümmung zurücktreten, bis die radialen Anteile des Krümmungsverlaufes überwiegen. Im äußeren Randbereich des Leitkörpers 14 an seinem größten radialen Abstand zur Mittellinie kann die Krümmung wieder axiale Anteile aufweisen, d.h. der äußere Rand der Prallflache 15 kann wiederum leicht nach unten gekrümmt sein. Bevorzugt kann die Prallfläche 15 als Rotationsfläche eines hyperbel- oder parabelähnlichen Kurventeils ausgebildet sein.

Durch den in den Rohrleitungsabschnitt 11b eintauchenden Teil der Prallflache 15 bekommt die Mündungsöffnung 13 unmittelbar am oberen Rand des Rohrleitungsabschnitts 11 b einen stark verringerten Auslassquerschnitt, wobei die Mündungsöffnung 13 ringförmig wird. Der Auslassquerschnitt der Mündungsöffnung 13 kann, eine entsprechende Krümmung der Prallfläche 15 vorausgesetzt, durch axiales Verschieben des Leitkörpers 14 in ihrer Größe eingestellt werden.

Durch die Pumpe 12 wird Würze aus dem Würzevorrat 3 über die Rohrleitung 11 angesaugt und in die Steigleitung gedrückt, und durch den sich unmittelbar am Ende des Rohrleitungsabschnittes 11b verringernden Auslassquerschnitt der Mündungsöffnung 13 beschleunigt, aber volumenmäßig reduziert, mit hoher Energie gegen die Prallfläche 15 geleitet, so dass sich dort die Würze in Form einer Dünnschichtglocke entlang der Pfeile 16 verteilt und wieder in den Vorrat 3 gelangt Die Pumpe, die Mündungsöffnung 13 mit verringertem Querschnitt und die Prallfläche 15 bilden somit eine Dünnschicht-Verteileinrichtung 17.

Die Dünnschicht-Verteileinrichtung 17 enthält weiterhin eine zusätzliche Einleitungsenrichtung 18, die auch in Fig. 2 zu sehen ist. Die Einleitungseinrichtung 18 umfasst einen Bereich 19 des Rohrleitungsabschnittes 11b mit verringertem Querschnitt, der sich unterhalb des Flüssigkeitsspiegels 3a im Würzevorrat 3 sowie innerhalb des Staukonus 6 befindet. Der Bereich 19 mit verringertem Querschnitt bildet eine Ansaugöffnung 20, die nach oben hin durch eine konische Schürze 21 abgedeckt ist, so dass die Ansaugöffnung 20 nur von schräg unten, d.h. aus der Richtung der ausmündenden Rohre 5a des Wärmetauschers 5 zugänglich ist. lm dargestellten Ausführungsbeispiel ist der Rohrleitungsabschnitt11b zum Ausbilden der Einleitungseinrichtung 18 zweigeteilt und enthält ein unteres Rohrstück 22, das die Verbindung zum unteren Rohrleitungsabschnitt 11a bildet und in den Bereich 19 mit verringertem Querschnitt übergeht, und ein oberes Rohrstück 23, das koaxial zum Bereich 19 angeordnet ist und sich bis zur Mündungsöffnung 13 erstreckt, wobei das Rohrstück 23 im Wesentlichen den gleichen Innendurchmesser aufweist, wie die Steigleitung im ersten Rohrleitungsabschnitt 11a.

Durch den Bereich 19 mit verringertem Querschnitt wird nach dem Wasserstrahlpumpenprinzip eine Strömung erzeugt, die zusätzliche Würze aus dem Bereich oberhalb des Wärmetauschers 5 ansaugt und in das Innere des Rohrleitungsabschnittes 11b leitet. Auf diese Weise wird einerseits die Strömungsmenge 16 erhöht und andererseits die Durchströmung des Wärmetauschers 5 verbessert, so dass der Wärmeübergang verbessert und ein Fouling im Kocher reduziert werden kann.

Beim Betrieb der erfindungsgemäßen Würzepfanne 1 wird durch den Innenkocher 4 der Würzevorrat 3 erwärmt, wobei durch die Erwärmung im Wärmetauscher 5 für einen ersten Kreislauf der Würze 3 entlang der Pfeile 9 gesorgt wird. Gleichzeitig wird über die Pumpe 12 und eine oder bevorzugt mehrere aus dem Gefäßkörper 2 ausmündenden Rohrleitungen 11 Würze für einen zweiten Kreislauf entlang der Pfeile 16 angesaugt und in die Steigleitung gedruckt. Da der Rohrleitungsabschnitt 11a den Wärmetauscher 5 durchsetzt, wird die von der Pumpe herrührende Strömung durch eine Wärmeströmung überlagert, so dass die Würze mit zunehmender Energie durch die Einleiteinrichtung 18 gedrückt wird, wo zusätzlich Würze oberhalb des Wärmetauschers 5 angesaugt wird. Anschließend wird die gepumpte und angesaugte Würze durch die Mündungsöffnung 13 mit verringertem Querschnitt gegen die Prallfläche 15 geleitet und von dieser in einer Glocke mit geringer Schichtdicke verteilt zurück in den Würzevorrat 3 gebracht.

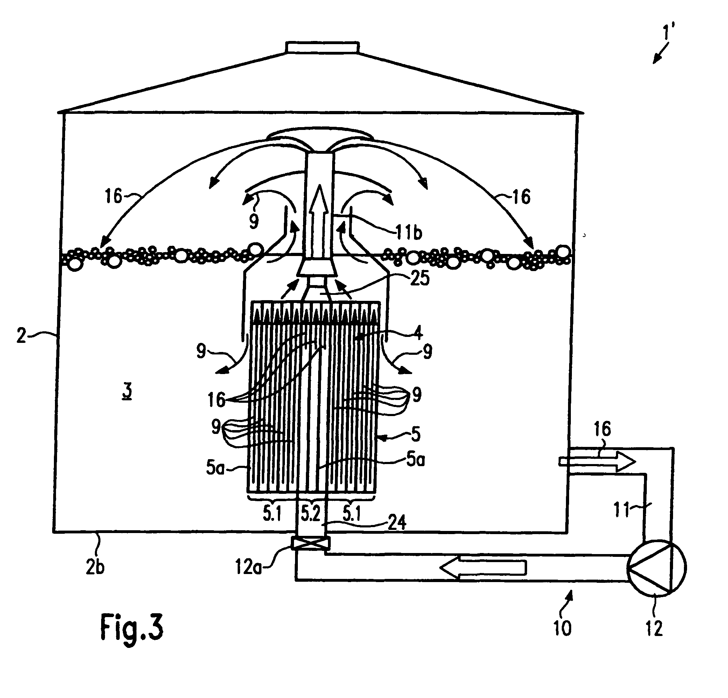

Fig. 3 zeigt ein weiteres Ausführungsbeispiel einer erfindungsgemäß ausgebildeten Würzepfanne 1', die bis auf die nachfolgend beschriebenen Einzelheiten der Würzepfanne 1 der Fig 1 und 2 entspricht, so dass diese nicht nochmals erläutert werden müssen.

Die Ausführungsform gemäß Fig. 3 ist besonders zur Nachrüstung bestehender Vorrichtungen zur Bierbereitung gedacht Zu diesem Zweck wird die in den Boden 2b des Gefäßkörpers 2 einmündende Rohrleitung 11 des Würze-Zwangsumlaufes 10 über einen Anschlussstutzen 24 mit einem oder mit mehreren Kanälen bzw. Rohren 5a des Wärmetausches 5 so verbunden, dass sich im Wärmetauscher 5 zwei im Wesentlichen voneinander abgeschlossene Wärmetauscherbereiche 5.1 und 5.2 ausbilden. Der Wärmetauscherbereich 5.1 steht wie üblich mit dem Würzevorrat 3 im Gefäßkörper 2 in Verbindung, während der Wärmetauscherbereich 5.2 vom Zwangsumlauf 10 versorgt wird. Am oberen Ausgang des Wärmetauschers 5 ist ein weiterer Anschlussstutzen 25 vorgesehen, der vom Wärmetauscherbereich 5.2 in den Rohrleitungsabschnitt 11b überleitet. Dabei kann der Anschlussstutzen 25 gleichzeitig als unteres Rohrstück der Einleiteinrichtung 18 (s. Fig. 2) ausgebildet sein.

Auch bei diesem Ausführungsbeispiel gemäß Fig 3 bilden sich somit die beiden Würze-Kreisläufe 9 und 16 aus.

In Abwandlung des beschriebenen und gezeichneten Ausführungsbeispiels kann die Erfindung bei Würzpfannen jeder konstruktiven Ausgestaltung, drucklos oder mit Druck arbeitend und bei jeder bekannten Konstruktion eines Innenkochers aber auch z.B. bei beheizten Vorlaufgefäßen oder dgl. eingesetzt werden.

## Patentansprüche

1. Vorrichtung zur Bierbereitung, insbesondere Würzepfanne (1), mit einem Gefäßkörper (2) zur Aufnahme eines Würzevorrats (3), einem im Gefäßkörper (2) angeordneten Innenkocher (4), der mit einem Wärmetauscher (5) und einem Leitschirm (8) versehen ist, und einem mit einer Pumpe (12) in Verbindung stehenden Würze-Zwangsumlauf (10), der durch den Kocher (4) verläuft, **dadurch gekennzeichnet, dass** der Würze-Zwangsumlauf (10) eine Dünnschicht-Verteileinrichtung (17) für die Würze enthält, die einen mit der Pumpe (12) in Verbindung stehenden Rohrleitungsabschnitt (11b) aufweist, der oberhalb des Leitschirms (8) über eine Mündungsöffnung (13) mit verringertem Auslassquerschnitt in den Gefäßkörper (2) einmündet und der oberhalb der Mündungsöffnung (13) eine von unten angeströmte, strömungsleitende Prallfläche (15) zum Umlenken der Flüssigkeit in Richtung auf den Würzevorrat (3) aufweist.

2. Vorrichtung nach Anspruch 1, **dadurch gekennzeichnet, dass** die Dünnschicht-Verteileinrichtung (17) über einen sich durch den Wärmetauscher (5) erstreckenden Rohrleitungsabschnitt (11a) mit der Pumpe (12) in Verbindung steht.

3. Vorrichtung nach Anspruch 1, **dadurch gekennzeichnet, dass** der Wärmetauscher (5) einen ersten Wärmetauscherbereich (5.1) für eine Wärmeströmung (9) innerhalb des Gefäßkörpers (2) und einen zweiten, dem Würze-Zwangsumlauf (10) zugeordneten Wärmetauscherbereich (5.2) enthält, und dass die Dünnschicht-Verteileinrichtung (17) über den zweiten Wärmetauscherbereich (5.2) mit der Pumpe (12) in Verbindung steht.

4. Vorrichtung nach Anspruch 1, **dadurch gekennzeichnet, dass** unterhalb der Mündungsöffnung (13) und oberhalb des Wärmetauschers (5) eine weitere Einleiteinrichtung (18) zum Einleiten von zusätzlicher Würze in den Rohrleitungsabschnitt (11b) vorgesehen ist.

5. Vorrichtung nach Anspruch 4, **dadurch gekennzeichnet, dass** die Einleiteinrichtung (18) wenigstens eine Ansaugöffnung (20) im Rohrleitungsabschnitt (11b) zum selbsttatigen Ansaugen der zusatzlichen Würze durch die Strömung im Rohrleitungsabschnitt (11b) enthält.

6. Vorrichtung nach Anspruch 5, **dadurch gekennzeichnet, dass** der Ansaugöffnung (20) ein querschnittsverminderter Bereich (19) des Rohrleitungsabschnitts (11b) zugeordnet ist.

7. Vorrichtung nach einem der Ansprüche 1 bis 6, **dadurch gekennzeichnet, dass** die Prallfläche (15) in der Mündungsöffnung (13) vorgesehen ist und von dort sanft gekrümmt zunächst überwiegend in Axialrichtung ansteigt und dann zunehmend in Radialrichtung nach außen verläuft.

8. Vorrichtung nach einem der Ansprüche 1 bis 7, **dadurch gekennzeichnet, dass** die Mündungsöffnung (13) ringspaltartig ausgebildet ist.

9. Vorrichtung nach einem der Ansprüche 1 bis 8, **dadurch gekennzeichnet, dass** der verringerte Auslassquerschnitt durch die in die Mündungsöffnung (13) eintauchende Prallfläche (15) gebildet ist.

10. Vorrichtung nach einem der Ansprüche 1 bis 9, **dadurch gekennzeichnet, dass** die Größe des Auslassquerschnitts einstellbar ist.

11. Verfahren zur Bierbereitung, insbesondere Würzekochen, **gekennzeichnet durch** die Ausbildung eines ersten und eines zweiten Würzekreislaufs (9, 16), wobei der erste Würzekreislauf (9) ein Wärmeströmungs-Kreislauf ist und wobei der zweite Würzekreislauf (16) über einen Würze-Zwangsumlauf (10) mit einer Pumpe (12) und einer Dünnschicht-Verteileinrichtung (17) verläuft.

## Claims

1. Apparatus for beer preparation, in particular wort kettle (1), having a tank body (2) for receiving a wort stock (3), an internal boiler (4) which is disposed in the tank body and is provided with a heat exchanger (5) and a guide screen (8), and a forced wort circulation (10) which is connected to a pump (12) and passes through the boiler (4),**characterized in that** the forced wort circulation (10) comprises a thin-film distribution device (17) for the wort, which distribution device has a piping section (11b) which is connected to the pump (12), which piping section opens out into the tank body (2) above the guide screen (8) via an orifice (13) of reduced cross-sectional area and which has, above the orifice (13) a flow-guiding baffle surface (15) which is impinged by flow from below and is for deflecting the liquid in the direction towards the wort stock (3).

2. Apparatus according to Claim 1, **characterized in that** the thin-film distribution device (17) is connected to the pump (12) via the piping section (11a) extending through the heat exchanger (5).

3. Apparatus according to Claim 1, **characterized in that** the heat exchanger (5) comprises a first heat-exchange region (5.1) for a heat flow (9) within the tank body (2) and a second heat-exchange region (5.2) assigned to the forced wort circulation (10), and **in that** the thin-film distribution device (17) is connected to the pump (12) via the second heat-exchange region (5.2).

4. Apparatus according to Claim 1, **characterized in that** a further feed device (18) for feeding additional wort into the piping section (11b) is provided below the orifice (13) and above the heat exchanger (5).

5. Apparatus according to Claim 4, **characterized in that** the feed device (18) comprises at least one intake opening (20) in the piping section (11b) for the self-acting intake of the additional wort by the flow in the piping section (11b).

6. Apparatus according to Claim 5, **characterized in that** a reduced cross-sectional area region (19) of the piping section (11b) is assigned to the intake opening (20).

7. Apparatus according to one of Claims 1 to 6, **characterized in that** the baffle surface (15) is provided in the orifice (13) and from there first climbs in a gently curved manner in an axial direction and then proceeds increasingly outwards in a radial direction.

8. Apparatus according to one of Claims 1 to 7, **characterized in that** the orifice (13) is constructed in the manner of an annulus.

9. Apparatus according to one of Claims 1 to 8, **characterized in that** the reduced outlet cross-sectional area is formed by the baffle surface (15) dipping into the orifice (13).

10. Apparatus according to one of Claims 1 to 9, **characterized in that** the size of the outlet cross-sectional area is adjustable.

11. Process for beer preparation, in particular wort boiling, **characterized by** the development of a first and a second wort circulation (9, 16), the first wort circulation (9) being a thermal flow circulation, and the second wort circulation (16) proceeding via a forced wort circulation (10) having a pump (12) and a thin-film distribution device (17).

## Revendications

1. Dispositif pour la préparation de la bière, en particulier brassin à moût (1), comprenant un corps de récipient (2) pour recevoir une réserve de moût (3), une chaudière intérieure (4), disposée dans le corps de récipient (2) et munie d'un échangeur thermique (5) et d'un écran déflecteur (8), et une boucle forcée de moût (10) reliée à une pompe (12), **caractérisé en ce que** la boucle forcée de moût (10) comporte un dispositif de répartition en couche mince (17) pour le moût, qui présente une section de tuyauterie (11b) reliée à la pompe (12) et qui débouche dans le corps de récipient (2) au-dessus de l'écran déflecteur (8), par une ouverture de sortie (13) de section transversale d'échappement réduite, et qui présente au-dessus de l'ouverture de sortie (13) une surface d'impact (15) conductrice d'écoulement, balayée à partir du bas, pour dévier le liquide en direction de la réserve de moût (3).

2. Dispositif suivant la revendication 1, **caractérisé en ce que** le dispositif de répartition en couche mince (17) est relié à la pompe (12) par l'intermédiaire d'une section de tuyauterie (11a) s'étendant au travers de l'échangeur thermique (5).

3. Dispositif suivant la revendication 1, **caractérisé en ce que** l'échangeur thermique (5) comporte une première zone d'échangeur thermique (5.1) pour une convection (9) à l'intérieur du corps de récipient (2) et une seconde zone d'échangeur thermique (5.2) associée à la boucle forcée de moût (10), et que le dispositif de répartition en couche mince (17) est relié à la pompe (12) par l'intermédiaire de la seconde zone d'échange thermique (5.2).

4. Dispositif suivant la revendication 1, **caractérisé en ce qu'**un autre dispositif d'introduction (18) est prévu au-dessous de l'ouverture de sortie (13) et au-dessus de l'échangeur thermique (5) pour introduire du moût supplémentaire dans la section de tuyauterie (11b).

5. Dispositif suivant la revendication 4, **caractérisé en ce que** le dispositif d'introduction (18) comporte au moins une ouverture d'aspiration (20) dans la section de tuyauterie (11b) pour l'aspiration automatique du moût supplémentaire par l'écoulement dans la section de tuyauterie (11b).

6. Dispositif suivant la revendication 5, **caractérisé en ce qu'**une zone (19) de section transversale réduite de la section de tuyauterie (11b) est associée à l'ouverture d'aspiration (20).

7. Dispositif suivant l'une des revendications 1 à 6, **caractérisé en ce que** la surface d'impact (15) est prévue dans l'ouverture de sortie (13) et de là, doucement incurvée, s'élève d'abord principalement dans la direction axiale puis s'étend de façon croissante vers l'extérieur dans la direction radiale.

8. Dispositif suivant l'une des revendications 1 à 7, **caractérisé en ce que** l'ouverture de sortie (13) est configurée à la manière d'une fente annulaire.

9. Dispositif suivant l'une des revendications 1 à 8, **caractérisé en ce que** la section transversale d'échappement réduite est formée par la surface d'impact (15) plongeant dans l'ouverture de sortie (13).

10. Dispositif suivant l'une des revendications 1 à 9, **caractérisé en ce que** la taille de la section transversale d'échappement est réglable.

11. Procédé pour la préparation de la bière, en particulier l'ébullition de moût, **caractérisé par** la réalisation d'un premier et d'un second circuit de moût (9, 16), le premier circuit (9) étant un circuit par convection et le second circuit (16) passant au travers d'une boucle forcée de moût (10) avec une pompe (12) et un dispositif de répartition en couche mince (17).
